# EUROPÄISCHE PATENTSCHRIFT

(11) **EP 2 055 941 B1**
(45) Veröffentlichungstag und Bekanntmachung des Hinweises auf die Patenterteilung: **21.08.2013**
(21) Anmeldenummer: 08015503.9
(22) Anmeldetag: 03.09.2008
(51) Int. Cl.: F03D 11/00

(54) **Vorrichtung zur Belüftung einer Rotornabe einer Windenergieanlage**
Ventilating device for the rotor hub of a wind generator
Dispositif de ventilation pour le moyeu de rotor d'une éolienne

(30) Priorität: 31.10.2007 DE 102007052276
(43) Veröffentlichungstag der Anmeldung: 06.05.2009
(73) Patentinhaber: Nordex Energy GmbH, 22848 Norderstedt (DE)
(72) Erfinder: Bielefeldt, Lars Christian, 18057 Rostock (DE)
(74) Vertreter: Hauck Patent- und Rechtsanwälte

(56) Entgegenhaltungen:
- DE-B3-102004 058 776
- JP-A- 2007 113 518
- US-A1- 2004 160 063

## Beschreibung

Die vorliegende Erfindung betrifft eine Vorrichtung zur Belüftung einer Rotornabe einer Windenergieanlage.

Aus DE 10 2004 058 776 B3 ist eine Vorrichtung zur Belüftung einer Rotornabe einer Windenergieanlage bekannt. Die Belüftungseinrichtung besitzt ein napfförmiges Element, das einen Grund und eine umlaufende Seitenwand besitzt. Ferner ist ein rohrförmiger Stutzen vorgesehen, der in einen Innenraum der Rotornabe weist. Bei der bekannten Belüftungseinrichtung ist das napfförmige Element derart von einer Eintrittsöffnung des Stutzens gehalten, daß die Eintrittsöffnung innerhalb des napfförmigen Elements angeordnet ist. Im Betrieb der Windenergieanlage tritt eine Luftströmung an dem napfförmigen Element vorbei in den rohrförmigen Stutzen ein und belüftet so den Innenraum der Rotornabe. Wenn es regnet, verhindert die Position des rohrförmigen Stutzens in dem napfförmigen Element, daß das Wasser in den Innenraum der Rotornabe gelangt.

Anders stellt sich die Situation jedoch bei einer nicht an der Windenergieanlage montierten Rotornabe dar. Die noch nicht montierte Rotornabe wird meist auf einer Seite gelagert, die zum Anschluß an die Rotorwelle vorgesehen ist, so daß die Belüftungseinrichtung nach oben weist. Es hat sich herausgestellt, daß die aus DE 10 2004 058 776 B3 bekannte Belüftungseinrichtung in dieser Lagerposition der Rotornabe einen Wassereintritt in den Innenraum der Rotornabe nicht verhindern kann.

Der Erfindung liegt die Aufgabe zugrunde, eine verbesserte Belüftungseinrichtung für die Rotornabe einer Windenergieanlage bereitzustellen, die sicherstellt, daß auch die sich im Inneren einer noch nicht montierten Rotornabe befindlichen Komponenten vor Regenwasser geschützt sind, insbesondere, wenn die Rotornabe sich in ihrer Lagerposition befindet.

Erfindungsgemäß wird die Aufgabe durch eine Vorrichtung zur Belüftung einer Rotornabe einer Windenergieanlage mit den Merkmalen aus Anspruch 1 gelöst.

Die erfindungsgemäße Vorrichtung zur Belüftung einer Rotornabe einer Windenergieanlage besitzt einen napfförmigen Belüftungsdeckel und einen rohrförmigen Stutzen. Der napfförmige Belüftungsdeckel besitzt eine umlaufende Seitenwand und einen von der Seitenwand umgebenen Grundabschnitt. Die Seitenwand ist mit mindestens einer Bohrung für ablaufendes Wasser versehen. Der Grundabschnitt des Belüftungsdeckels weist mindestens eine Bohrung zur Belüftung auf. Der rohrförmige Stutzen verfügt über eine Lufteintrittsöffnung und eine Luftaustrittsöffnung, die in einem Innenraum der Rotornabe mündet. Über den rohrförmigen Stutzen ist der Innenraum der Rotornabe mit der Umgebung verbunden. Der Belüftungsdeckel ist vor der Lufteintrittsöffnung angeordnet ohne diese vollstän-dig zu verschließen. Die mindestens eine Bohrung zur Belüftung in dem Belüftungsdeckel ist derart außerhalb der Lufteintrittsöffnung des röhrförmigen Stutzens angeordnet, daß die Lufteintrittsöffnung durch den Belüftungsdeckel abgeschirmt ist. Bei der erfindungsgemäßen Belüftungseinrichtung ist die Lufteintrittsöffnung des Stutzens vor direktem Wassereintritt, beispielsweise vor Regenwasser geschützt, indem der Belüftungsdeckel die Lufteinlaßöffnung des Stutzens verdeckt und so eine geradlinige Verbindung der Umgebung mit dem Innenraum der Rotornabe versperrt. Zugleich besitzt der Belüftungsdeckel in seiner Seitenwand mindestens eine Bohrung, über die Regenwasser, das sich zwischen dem Stutzen und dem Belüftungsdeckel gesammelt hat, wieder aus der Belüftungseinrichtung herausgeführt werden kann.

In einer bevorzugten Ausgestaltung ist der Grundabschnitt des Belüftungsdeckels in einem zentralen Abschnitt ohne Bohrungen versehen, wobei der Durchmesser des zentralen Abschnitts größer als der Durchmesser der Lufteintrittsöffnung des rohrförmigen Stutzens ist. Der nicht mit einer Bohrung versehene zentrale Abschnitt verdeckt die Lufteintrittsöffnung.

In einer bevorzugten Ausgestaltung besteht der Grundabschnitt des Belüftungsdeckels aus einem zentralen Abschnitt und einem Übergangsabschnitt. Der zentrale Abschnitt ist über den Übergangsabschnitt mit der umlaufenden Seitenwand verbunden. Bevorzugt ist die mindestens eine Lüftungsbohrung des Grundabschnitts in dem Übergangsabschnitt angeordnet. Ferner ist der zentrale Abschnitt in dem Grundabschnitt gegenüber den Seitenwänden abgesenkt, und liegt somit in einer Höhe zwischen Oberkante und Unterkante der Seitenwand. Durch die Absenkung sind die Löcher im Übergangsabschnitt so angeordnet, dass zwischen der Flächennormale des Querschnitts und einer Regeneinfallsrichtung ein möglichst großer Winkel ist.

In einer bevorzugten Ausgestaltung ist der rohrförmige Stutzen im Bereich einer Lufteintrittsöffnung trichterförmig erweitert. Die trichterförmige Erweiterung stellt sicher, dass bei Betrieb der Anlage kein Wasser in den Stutzen eindringen kann. Die Gondel und damit auch die Nabe der Windenergieanlage sind in leichter Schrägstellung nach oben am Turm montiert. Die Trichteröffnung ist weit geöffnet, dass der jeweils untere Abschnitt der Trichterwand bei montierter Nabe leicht nach unten geneigt ist. Auf der Trichterwand auftreffendes Wasser läuft damit aus der Trichteröffnung in den Innenraum der Belüftungsvorrichtung und durch eine Bohrung in der Seitenwand nach außen ab. Bei Schlagregen trifft das Wasser auf den Wandabschnitt der Nabe, läuft am Belüftungsstutzen vorbei und ebenfalls durch die Bohrung in der Seitenwand nach außen ab.

In einer bevorzugten Ausgestaltung steht der rohrförmige Stutzen aus einem Wandabschnitt der Rotornabe hervor, an dem auch der Belüftungsdeckel gehalten ist. Bevorzugt ist der Wandabschnitt als ein verschließbares Türelement ausgebildet, um Zugang in den Innenraum der Rotornabe zu erhalten.

In einer bevorzugten Ausgestaltung ist das Wandmaterial aus einem transparenten Material hergestellt. Die Verwendung von transparentem Material erlaubt einerseits Lichteinfall in den Innenraum der Rotornabe und zugleich wird hierdurch die Möglichkeit geschaffen, den Raum unter den Belüftungsdeckel zu inspizieren.

Eine bevorzugte Ausgestaltung der erfindungsgemäßen Lüftungseinrichtung wird nachfolgend an einem Ausführungsbeispiel näher erläutert. Es zeigt:
- Fig. 1: die erfindungsgemäße Belüftungseinrichtung im Querschnitt,
- Fig. 2: eine herkömmliche Belüftungseinrichtung für die Rotornabe und
- Fig. 3: die erfindungsgemäße Belüftungseinrichtung im Querschnitt in der montierten Position.

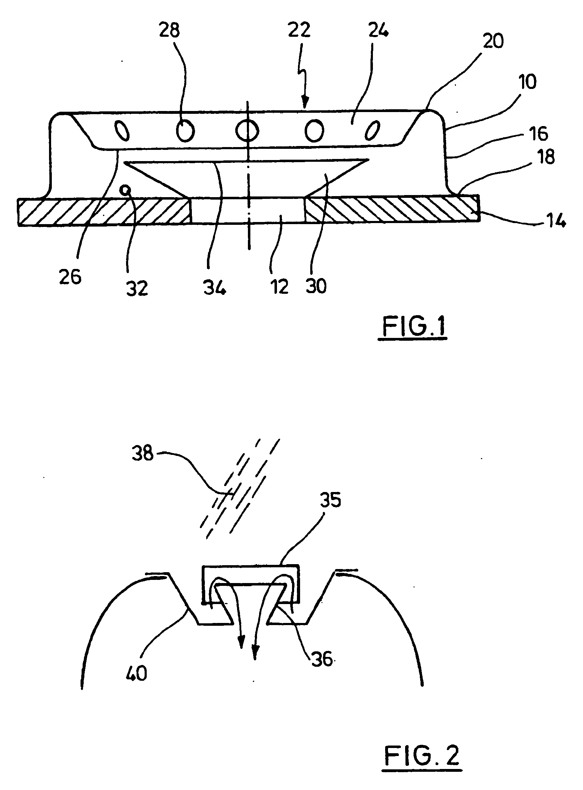

Figur 1 zeigt den Aufbau der erfindungsgemäßen Belüftungseinrichtung im Querschnitt. Die Belüftungseinrichtung besteht aus einem Belüftungsdeckel 10, der oberhalb eines Belüftungsstutzens 12 angeordnet ist. Der Belüftungsstutzen 12 ist in einem Wandabschnitt 14 der Rotornabe gehalten. Der Belüftungsdeckel 10 besitzt eine umlaufende Seitenwand 16, die mit einem abgewinkelten Randbereich 18 an der Außenwand des Rotorgehäuses befestigt ist.

Die Seitenwand 16 besitzt einen gewölbten Abschnitt, der einen umlaufenden Ring (20) bildet. Innerhalb des Rings 20 befindet sich der Grundabschnitt 22 des Belüftungsdeckels. Der Grundabschnitt 22 besitzt einen Übergangsabschnitt 24 und einen zentralen Abschnitt 26. In dem Übergangsabschnitt 24 sind Belüftungsbohrungen 28 vorgesehen.

Der konzentrisch unter dem Belüftungsdeckel 10 angeordnete Stutzen 12 besitzt einen sich trichterförmig erweiternden Abschnitt 30, der die Lufteintrittsöffnung bildet.

Eine Entwässerungsbohrung 32 in der Seitenwand 16 ist unterhalb einer Oberkante 34 des sich trichterförmig erweiternden Abschnitts 30 vorgesehen.

Befindet sich die Rotornabe in ihrer üblichen Lagerposition, so besitzt die Belüftungseinrichtung die in der Figur 1 dargestellte Position. In dieser Position ist sichergestellt, daß eintretendes Wasser nicht in den Innenraum der Rotornabe gelangt. Das über die Lüftungsbohrung 28 eintretende Regenwasser sammelt sich in dem Raum zwischen dem Stutzen 12 und dem Belüftungsdeckel 10. Bevor das Wasser eine Höhe erreicht, die es ihm erlaubt, über die Kante 34 hinweg in den Innenraum der Rotornabe einzutreten, fließt das Wasser über die Entwässerungsbohrung 32 wieder ab.

Figur 2 zeigt eine Belüftungsvorrichtung aus dem Stand der Technik. Bei dieser ist ein napfförmiges Abdeckelement 35 vorgesehen, das über einen trichterförmigen Stutzen 36 angeordnet ist. Einfallendes Regenwasser 38 kann sich in einer Halterung 40 für den Stutzen 36 sammeln und über die Kante des Stutzens in den Innenraum der Rotornabe eintreten. Ein solcher Wassereintritt kann zur Beschädigung von bereits montierten Komponenten in der Rotornabe führen.

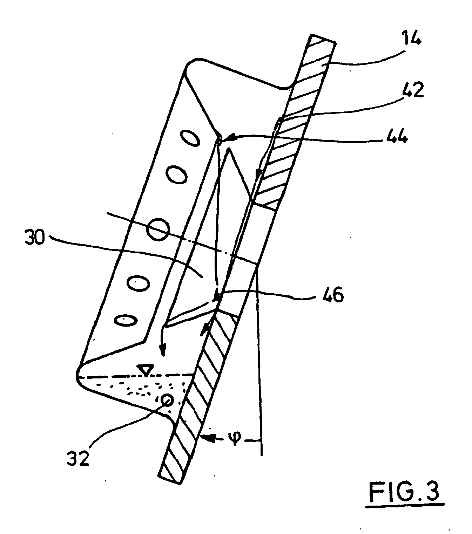

Die Funktionsweise der erfindungsgemäßen Belüftungseinrichtung in ihrer montierten Position wird aus Figur 3 deutlich. Üblicherweise ist die Gondel und damit auch die Nabe der Windenergieanlage in einer leichten Schrägstellung nach oben am Turm montiert. Die Schrägstellung ist in Fig. 3 durch den Winkel ϕ gegenüber dem Lot angedeutet. Ein Flüssigkeitseintritt in die Belüftungseinrichtung kann zu einer Flüssigkeitsmenge 42 führen, die sich auf dem Wandabschnitt 14 der Rotornabe sammelt. Die Flüssigkeitsmenge 42 fließt unter Einwirkung der Schwerkraft nach unten und kann über die Entwässerungsbohrung 32 austreten. Ferner kann sich auch eine Flüssigkeitsmenge 44 auf der Innenseite des Belüftungsdeckels sammeln. Im ungünstigsten Fall tropft diese Flüssigkeitsmenge 44 in den sich trichterförmig erweiterten Abschnitt 30 des Stutzens 12. Wie in Figur 3 dargestellt tritt die abgetropfte Flüssigkeitsmenge jedoch unter Einwirkung der Schwerkraft wieder aus dem Trichter aus und kann ebenfalls über die Entwässerungsbohrung 32 aus der Belüftungseinrichtung austreten. Um den Austritt der abgetropften Flüssigkeitsmenge 46 zu gewährleisten ist es erforderlich, daß der Öffnungswinkel des Bereiches 30 größer ist als der Neigungswinkel ϕ der Rotornabe.

Der Luftstrom in die Nabe entsteht im Wesentlichen durch einen Unterdruck in der Nabe. Durch die Rotation der Rotornabe wirkt auf die Luftmasse, die sich im Rotorblatt befindet, eine Fliehkraft, die eine Erhöhung des Luftdrucks im Rotorblatt zur Folge hat. Dieser erhöhte Druck entspannt sich über eine Bohrung in der Flügelspitze, die mit der Umgebung verbunden ist und es entsteht eine Luftströmung durch die Flügel nach außen. In der Rotornabe entsteht dadurch ein Unterdruck durch den neue Luft aus der Umgebung durch die Belüftungsvorrichtung hindurch angesaugt wird. Der Belüftungsdeckel kann somit deutlich kleiner dimensioniert werden. Das in der Nabe befindliche Luftvolumen wird etwa dreimal je Stunde ausgetauscht.

## Patentansprüche

1. Vorrichtung zum Belüften einer Rotornabe einer Windenergieanlage, mit
- einem napfförmigen Belüftungsdeckel (10), der eine umlaufende Seitenwand (16) und einen Grundabschnitt (22) besitzt, sowie
- einem rohrförmigen Stutzen (12), der eine Lufteintrittsöffnung aufweist, die in einem Innenraum der Rotornabe mündet,
- wobei der Belüftungsdeckel (10) vor der Lufteintrittsöffnung und mindestens eine Bohrung (28) zur Belüftung in dem Belüftungsdeckel (10) derart außerhalb der Lufteintrittsöffnung des rohrförmigen Stutzens (12) angeordnet sind, dass die Lufteintrittsöffnung durch den Belüftungsdeckel (10) verdeckt ist,
**dadurch gekennzeichnet, dass** die Seitenwand (16) an der Außenwand der Rotornabe befestigt ist und mindestens eine Bohrung (32) für ablaufendes Wasser aufweist und der Grundabschnitt (22) die mindestens eine Bohrung (28) zur Belüftung aufweist.

2. Vorrichtung nach Anspruch 1, **dadurch gekennzeichnet, dass** der Grundabschnitt (22) des Belüftungsdeckels (10) einen zentralen Abschnitt (26) ohne Bohrung besitzt, dessen Durchmesser größer als der Durchmesser der Lufteintrittsöffnung des rohrförmigen Stutzens (12) ist.

3. Vorrichtung nach Anspruch 2, **dadurch gekennzeichnet, dass** der Grundabschnitt (22) einen zentralen Abschnitt (26) und einen Übergangsabschnitt (24) aufweist, wobei der zentrale Abschnitt (26) über den Übergangsabschnitt (24) mit der umlaufenden Seitenwand (16) verbunden ist.

4. Vorrichtung nach Anspruch 3, **dadurch gekennzeichnet, dass** die mindestens eine Bohrung (28) zur Belüftung des Grundabschnitts (22) in dem Übergangsabschnitt (24) angeordnet ist.

5. Vorrichtung nach einem der Ansprüche 1 bis 4, **dadurch gekennzeichnet, dass** der zentrale Abschnitt (26) in dem Grundabschnitt (22) gegenüber der Seitenwand (16) abgesenkt ist.

6. Vorrichtung nach einem der Ansprüche 1 bis 5, **dadurch gekennzeichnet, dass** der rohrförmige Stutzen (12) im Bereich seiner Lufteintrittsöffnung sich trichterförmig erweitert.

7. Vorrichtung nach Anspruch 6, **dadurch gekennzeichnet, dass** der Öffnungswinkel des sich trichterförmig erweiternden Abschnitts größer oder gleich einem Neigungswinkel der Rotornabe gegenüber der Horizontalen ist.

8. Vorrichtung nach einem der Ansprüche 1 bis 7, **dadurch gekennzeichnet, dass** der rohrförmige Stutzen (12) aus einem Wandabschnitt (14) der Rotornabe hervorsteht, an dem der Belüftungsdeckel (10) gehalten ist.

9. Vorrichtung nach Anspruch 8, **dadurch gekennzeichnet, dass** der Wandabschnitt (14) als ein verschließbares Türelement für einen Zugang in das Innere der Rotornabe ausgebildet ist.

10. Vorrichtung nach Anspruch 8 oder 9, **dadurch gekennzeichnet, dass** der Wandabschnitt (14) aus einem transparenten Material hergestellt ist.

## Claims

1. Device for the ventilation of a rotor hub of a wind turbine, with
• a cup-shaped ventilation cap (10), which has a circumferential side wall (16) and a base portion (22),
• a pipe-shaped connection piece (12), which has an air entrance opening which runs out into an interior space of the rotor hub,
• wherein the ventilation cap (10) is arranged before the air entrance opening and at least one bore (28) for ventilation is arranged in the ventilation cap (10) outside of the air entrance opening of the pipe-shaped connection piece (12) such that the air entrance opening is covered up by the ventilation cap (10), **characterized in that** the circumferential side wall (16) is connected to the exterior wall of the rotor hub and has at least one bore (32) for draining water and the base portion (22) has the at least one bore (28) for ventilation.

2. Device according to claim 1, **characterised in that** the base portion (22) of the ventilation cap (10) has a central portion (26) without a bore, the diameter of which is greater than the diameter of the air entrance opening of the pipe-shaped connection piece (12).

3. Device according to claim 2, **characterised in that** the base portion (22) has a central portion (26) and a transition portion (24), wherein the central portion (26) is connected to the circumferential side wall (16) via the transition portion (24).

4. Device according to claim 3, **characterised in that** the at least one bore (28) for ventilation of the base portion (22) is arranged in the transition portion (24).

5. Device according to one of claims 1 to 4, **characterised in that** the central portion (26) in the base portion (22) is depressed with respect to the circumferential side wall (16).

6. Device according to one of claims 1 to 5, **characterised in that** the pipe-shaped connection piece (12) diverges like a funnel in the region of its air entrance opening.

7. Device according to claim 6, **characterised in that** the opening angle of the portion diverging like a funnel is greater than or equal to an inclination angle of the rotor hub with respect to the horizontal line.

8. Device according to one of claims 1 to 7, **characterised in that** the pipe-shaped connection piece (12) projects from a wall portion (14) of the rotor hub on which the ventilation cap (10) is held.

9. Device according to claim 8, **characterised in that** the wall portion (14) is constituted as a lockable door element for an access into the interior of the rotor hub.

10. Device according to claim 8 or 9, **characterised in that** the wall portion (14) is made from a transparent material.

## Revendications

1. Dispositif de ventilation pour le moyeu de rotor d'une éolienne, comprenant
- un couvercle de ventilation (10) en forme de cuvette qui possède une paroi latérale circulaire (16) et une section de base (22),
- un manchon tubulaire (12) qui comporte un orifice d'admission d'air qui débouche dans un espace interne du moyeu de rotor,
- le couvercle de ventilation (10) en amont de l'orifice d'admission d'air et au moins un alésage (28) pour la ventilation dans le couvercle de ventilation (10) est agencé à l'extérieur de l'orifice d'admission d'air du manchon tubulaire (12), de telle sorte que l'orifice d'admission d'air est recouvert par le couvercle de ventilation (10),
**caractérisé en ce que** la paroi latérale circulaire (16) est fixée sur la paroi externe du moyeu de rotor et comporte au moins un alésage (32) pour l'écoulement d'eau et la section de base (22) comporte au moins alésage (28) pour la ventilation.

2. Dispositif selon la revendication 1, **caractérisé en ce que** la section de base (22) du couvercle de ventilation (10) possède une partie centrale (26) sans alésage dont le diamètre est supérieur à celui de l'orifice d'admission d'air du manchon tubulaire (12).

3. Dispositif selon la revendication 2, **caractérisé en ce que** la section de base (22) présente une partie centrale (26) et une partie de transition (24), la partie centrale (26) étant reliée via la partie de transition (24) à la paroi latérale circulaire (16).

4. Dispositif selon la revendication 3, **caractérisé en ce que** ledit au moins un alésage (28) pour la ventilation de la section de base (22)est agencé dans la partie de transition (24).

5. Dispositif selon une des revendications 1 à 4, **caractérisé en ce que** la partie centrale (26) dans la section de base (22) est abaissée par rapport au la paroi latéral circulaire (16).

6. Dispositif selon une des revendications 1 à 5, **caractérisé en ce que** le manchon tubulaire (12) s'étend en forme d'entonnoir dans la zone de son orifice d'admission d'air.

7. Dispositif selon la revendication 6, **caractérisé en ce que** l'angle d'ouverture de la section s'étendant en forme d'entonnoir est supérieur ou identique à un angle d'inclinaison du moyeu de rotor par rapport à l'horizontale.

8. Dispositif selon une des revendications 1 à 7, **caractérisé en ce que** le manchon tubulaire (12) dépasse d'une section murale (14) du moyeu de rotor contre laquelle est maintenu le couvercle de ventilation (10).

9. Dispositif selon la revendication 8, **caractérisé en ce que** la section murale (14) se présente sous la forme d'un élément de porte verrouillable pour un accès à l'intérieur du moyeu de rotor.

10. Dispositif selon la revendication 8 ou 9, **caractérisé en ce que** la section murale (14) est fabriquée dans un matériau transparent.
